# EUROPÄISCHE PATENTANMELDUNG

(11) **EP 3 543 925 A1**
(43) Veröffentlichungstag der Anmeldung: **25.09.2019**
(21) Anmeldenummer: 18162646.6
(22) Anmeldetag: 19.03.2018
(51) Int. Cl.: G06Q 10/08

(54) **VERFAHREN UND VORRICHTUNG ZUM IDENTIFIZIEREN VON EINEM AUSGEWÄHLTEN STÜCKGUT**

(71) Anmelder: Siemens Aktiengesellschaft, 80333 München (DE)
(72) Erfinder: STRÖBEL, Oliver, 90762 Fürth (DE); PASHOV, Dr. Ilian, 78467 Konstanz (DE); ROTTLAND, Dr. Jörg, 78315 Radolfzell (DE); MUECK, Dr. Bengt, 32760 Detmold (DE)
(74) Vertreter: Maier, Daniel Oliver

(57) **Zusammenfassung**

Die Erfindung offenbart ein Verfahren und eine Vorrichtung (20) zum Identifizieren von einem ausgewählten Stückgut (2), das eine Markierung (4) mit einem das Stückgut (2) identifizierbaren Informationssatz aufweist, im Rahmen einer Abwicklung dieses Stückguts (2), insbesondere einer Abfertigung eines Gepäckstücks im Rahmen einer Flughafen-Gepäckabfertigung. Die Vorrichtung (20) umfasst eine Erfassungseinheit (6), eine Kontrolleinheit (22) und ein Erkennungsmittel (12). Das Verfahren umfasst die Verfahrensschritte
a) Erstellen eines Abbilds des Stückguts (2) samt Markierung (4) durch die Erfassungseinheit (6) in einem Erfassungsbereich (14) befindet.
b) Identifizieren des Stückguts (2) durch Auslesen der Markierung (4) anhand des erstellten Abbilds durch die Kontrolleinheit (22).
c) Behandeln des Stückguts (2) nach einer Vorschrift der Abwicklung.

Die Erfassungseinheit (6) ist statisch oder mobil als Bodycamera ausgestaltet. Die Festlegung des Erfassungsbereichs (14) erfolgt mit Hilfe eines variabel positionierbaren Erkennungsmittels (12), das typischerweise mit der Hand eines Bedieners (8) verknüpft ist.

## Beschreibung

Die vorliegende Erfindung betrifft das technische Gebiet der Abwicklung von Stückgütern, insbesondere eine Abfertigung von Gepäckstücken in Flughäfen und von Postsendungen.

Das Identifizieren von Gepäckstücken in der Flughafen-Gepäckabfertigung ist von großer Bedeutung. Die Gepäckstücke werden mit Gepäckanhängern ("Baggage Tags") versehen, die das Gepäckstück eindeutig identifizierbare Informationen als Barcode und in Klartext umfassen. Diese werden von automatisierten Scannern (ATR - Automated Tag Reader) eingelesen, die jedoch fest im Bereich von Förderbändern installiert sind und zudem teuer in Anschaffung und Wartung sind. Bei der durch menschliche Bediener manuell unterstützten Verladung von Gepäckstücken wie dem Be- und Entladen von Flugzeugen von einem Gepäckanhänger aus, oder dem Verladen zwischen Förderbandenden auf Transportcontainer ("Baggage Make-Up Prozess") stößt die automatische Erfassung jedoch an ihre Grenzen. Die Verwendung mobiler Scanapparate erfordert zusätzliche Handgriffe des Bedieners, da diese jeweils zum Scannen in die Hand genommen werden müssen, um eine Abfertigung zu dokumentieren. Somit wird der Arbeitsfluss unterbrochen.

Auch im Bereich der Postsortierung und -zustellung tritt bei der Abwicklung an Endstellen des Sortier- und Auslieferungsprozesses dieselbe Problematik auf.

Wird auf ein Identifizieren des abgewickelten Stückguts im Rahmen seiner Abwicklung verzichtet, kann bei Verlust nicht nachvollzogen worden, an welcher Stelle dieser auftrat.

Der vorliegenden Erfindung liegt daher die Aufgabe zugrunde, eine verbesserte Vorrichtung und ein verbessertes Verfahren zum Identifizieren von Stückgütern im Rahmen ihrer Abwicklung bereitzustellen. Diese Aufgabe wird durch die in den unabhängigen Ansprüchen beschriebenen Lösungen gelöst.

Die erfindungsgemäße Lösung sieht ein Verfahren zum Identifizieren von einem ausgewählten Stückgut vor, das eine Markierung mit einem das Stückgut identifizierbaren Informationssatz aufweist, im Rahmen einer Abwicklung dieses Stückguts, insbesondere einer Abfertigung eines Gepäckstücks im Rahmen einer Flughafen-Gepäckabfertigung, umfassend die Verfahrensschritte:
a) Erstellen eines Abbilds des Stückguts oder Teilen des Stückguts samt Markierung oder zumindest Teilen der Markierung durch eine Erfassungseinheit, beispielsweise eine Kamera, wobei sich das Stückgut samt Markierung oder zumindest die Markierung in einem Sichtfeld eines Bedieners und in einem von einem Sichtfeld der Erfassungseinheit umfassten Erfassungsbereich befindet, wobei die Erfassungseinheit derart positionierbar ist, dass sich die Markierung in dem Sichtfeld der Erfassungseinheit befindet.
b) Identifizieren des Stückguts durch Auslesen der Markierung anhand des erstellten Abbilds durch eine Kontrolleinheit.
c) Behandeln des Stückguts nach einer Vorschrift der Abwicklung.

Unter einer Abwicklung soll sehr allgemein die Durchführung eines Prozesses mit dem Stückgut verstanden werden, wobei auch einzig das Identifizieren des Stückguts bereits den gesamten Abwicklungsprozess umfassen kann. Es ist jedoch auch möglich, dass die Abwicklung zudem das Repositionieren des Stückguts, beispielsweise während eines Förder- und/oder Ladeprozesses, oder weitere Prozessschritte umfasst. Insbesondere umfasst der Begriff Abwicklung das Be- und Entladen eines Flugzeugs und den Prozess der Gepäckabfertigung ("Baggage Make-up") im Bereich von Flughäfen, sowie während der Postsendungsbehandlung auftretende Prozesse wie Aufgabe, Zustellung, Annahme, Übergabe, Verladen (zwischen, von bzw. auf Speicherbehälter, Transportbehältnisse, Transportfahrzeuge, ...), insbesondere an End- bzw. Zwischenstellen des Prozesses.

Unter einem Stückgut im Sinne der Erfindung soll jedes kommissionierbare und markierbare Stückgut verstanden werden, wobei die Markierung direkt auf das Stückgut aufbringbar sein kann, beispielsweise in der Art eines Aufdrucks oder Aufklebers, und/oder eine eigene physische Einheit darstellen kann, beispielsweise in der Form eines Anhängers, insbesondere eines Gepäckanhängers. Die Markierung kann mensch- und/oder maschinenlesbar ausgestaltet sein. Insbesondere ist die Erfindung anwendbar auf Stückgüter wie Gepäckstücke und Postsendungen während ihrer Abwicklung.

Unter dem Erfassungsbereich soll ein festgelegter oder dynamischer Bereich des Sichtfelds der Erfassungseinheit verstanden werden, wobei die genaue Lage und/oder Größe des Erfassungsbereichs je nach Anwendung einstellbar ist.

Die erfindungsgemäße Lösung kann durch verschiedene, jeweils für sich vorteilhafte und, sofern nicht anders ausgeführt, beliebig miteinander kombinierbarer Ausgestaltungen weiter verbessert werden. Auf diese Ausgestaltungsformen und die mit ihnen verbundenen Vorteile wird im Folgenden eingegangen.

Die Tatsache, dass die Erfassungseinheit derart positionierbar ist, dass sich die Markierung in dem Sichtfeld der Erfassungseinheit befindet, ermöglicht ein zuverlässiges und dynamisches Erfassen der Markierung durch den Erfassungsbereich.

Der Erfassungsbereich wird vom Sichtfeld gänzlich umfasst, umgekehrt kann, muss das nicht notwendigerweise gelten. Der Erfassungsbereich ist also ein Teilbereich des Sichtfelds.

Gemäß einer Ausführungsform kann ein Abspeichern des erstellten Abbilds über das Behandeln des Stückguts nach der Vorschrift der Abwicklung hinaus und kann ein Heranziehen des Abbilds zur späteren Verwendung, insbesondere zum Beweisen eines Zustands des Stückguts zum Zeitpunkt der Erstellung des Abbilds und/oder zum Erkennen des Stückguts, herangezogen werden. Das Abbild kann von der Kontrolleinheit abgespeichert werden. Dadurch, dass die Stückgüter selber oder zumindest große Teile von ihnen auf den erstellten Abbildern gut sichtbar sind, ist es möglich, die Abbilder als Beweismittel heranzuziehen, um beispielsweise den Zustand der Stückgüter zum Zeitpunkt der Erfassung, also den Zustand beim Erstellen des Abbilds, nachzuweisen. Dies ist im Flughafenbereich von großem Vorteil, wenn Gepäckstücke beschädigt werden und eventuelle Haftungsansprüche ermittelt werden. Die gespeicherten Abbilder können auch bei einer Suche von verlorenen Gepäckstücken verwendet werden, um beispielsweise Koffer von eingecheckten, aber beim Boarding nicht zugestiegenen Passagieren schneller zu finden oder um beim Lost&Found schneller ein Gepäckstück am Flughafen identifizieren zu können.

Gemäß einer Ausführungsform kann die Erfassungseinheit zum Anbringen am Körper eines Bedieners, insbesondere im Brust-und/oder Kopfbereich, ausgestaltet sein. Dies ermöglicht ein dynamisches Positionieren der Erfassungseinheit. Die Positionierung im Kopf- und/oder Brustbereich stellt sicher, dass sich das ausgewählte Stückgut stets im Sichtfeld der Erfassungseinheit befindet.

Wenn sich mehr als ein Stückgut im Sichtfeld der Erfassungseinheit befindet, muss sichergestellt werden, dass die Markierung des ausgewählten Stückguts, das anschließend nach der Vorschrift der Abwicklung behandelt wird, und nicht die Markierung eines weiteren Stückguts identifiziert wird. Um Zweideutigkeiten bei der Auswahl des zu identifizierenden, ausgewählten Stückguts zu vermeiden und um eine flexible, durch den Bediener bestimmte Auswahl des ausgewählten Stückguts zu ermöglichen, kann ein Richten eines Erkennungsmittels hin zum und/oder in den Erfassungsbereich erfolgen, wobei das Erkennungsmittel mindestens eine von der Kontroll- und Erfassungseinheit identifizierbare und auslesbare Eigenschaft aufweisen kann, insbesondere ein auffälliges Muster und/oder eine auffällige Farbe und/oder eine Beleuchtung, insbesondere ein Lichtpunkt eines Laserpointers oder einer Leuchtdiode (LED). Nur die im Erfassungsbereich befindliche Markierung des ausgewählten Stückguts wird von der Kontrolleinheit als die zum ausgewählten Stückgut gehörende Markierung erkannt. Das Erkennungsmittel kann auf diese Weise Position und/oder Größe des Erfassungsbereichs lenken. Durch die Ausgestaltung des Erkennungsmittels sticht das Erkennungsmittel aus seiner Umgebung heraus, wodurch seine automatische Erkennung durch die Erfassungseinheit und Kontrolleinheit vereinfacht wird.

Gemäß einer weiteren Ausführungsform kann das Erkennungsmittel zumindest einen Teil mindestens einer Hand eines Bedieners umfassen und/oder markieren. Das Verfahren unterscheidet bei den Händen ihre zwei- und/oder dreidimensionale Form und/oder ihre Farbe von den übrigen Gegenständen im Sichtfeld der Erfassungseinheit. Eine zusätzliche Markierung der Hände, beispielsweise in Form eines reduzierten, nur einen Teil der Hand bedeckenden Handschuhs, erleichtert die Erkennung zusätzlich.

Gemäß einer weiteren Ausführungsform agiert eine in den Handschuh eingebaute Beleuchtung, beispielsweise eine Leuchtdiode, als hin zur und/oder auf die ausgewählte Markierung richtbares Erkennungsmittel.

Gemäß einer weiteren Ausführungsform kann ein Rückmelden eines erfolgreichen Identifizierens des Stückguts durch Auslesen der Markierung an den Bediener durch eine von der Erfassungseinheit und/oder der Kontrolleinheit erzeugte akustische und/oder optische Rückmeldung an den Bediener erfolgen. Die Rückmeldungen können von der Kontrolleinheit und/oder der Erfassungseinheit und/oder einer weiteren Vorrichtung erzeugt werden. Optische Rückmeldungen können beispielsweise ein Blinken einer Szenenbeleuchtung oder ein Blinksignal der Beleuchtung des Erkennungsmittels sein.

Gemäß einer weiteren Ausführungsform kann ein Erfassen des Behandelns des Stückguts nach der Vorschrift der Abwicklung durch die Erfassungs- und/oder Kontrolleinheit erfolgen. Das Erfassen kann anhand der Abbilder automatisiert, beispielsweise anhand einer Lageveränderung des ausgewählten Stückguts, oder anhand des Erfassens eines Befehls durch die Kontrolleinheit geschehen.

Gemäß einer weiteren Ausführungsform kann ein Erkennen des Erfassungsbereichs und/oder des Behandelns des ausgewählten Stückguts anhand eines verbalen und/oder nonverbalen Befehls erfolgen. Dieses so mögliche Lenken durch den Bediener minimiert fehlerhaftes Erkennen. Die Befehle können Gesten, Sprache, aber auch Drücken eines von dem Erfassungsmittel umfassten physischen Schalters sein.

Gemäß einer weiteren Ausführungsform kann die Beleuchtung des Erkennungsmittels, insbesondere des Laserpointers oder der LED, am Kopf des Bedieners angebracht sein und die Erfassungseinheit kann im Brustbereich oder ebenfalls im Kopfbereich angebracht sein.

Hinsichtlich einer Vorrichtung wird die vorstehend genannte Aufgabe gelöst durch eine Vorrichtung zum Identifizieren von einem ausgewählten Stückgut, das eine Markierung mit einem das Stückgut identifizierbaren Informationssatz aufweist, im Rahmen einer Abwicklung dieses Stückguts, insbesondere einer Abfertigung eines Gepäckstücks im Rahmen einer Flughafen-Gepäckabfertigung eines, umfassend eine Erfassungseinheit, beispielsweise eine Kamera, und eine Kontrolleinheit.
a) Die Erfassungseinheit ist ausgestaltet zum Erstellen eines Abbilds des Stückguts oder Teilen des Stückguts samt Markierung oder zumindest Teilen der Markierung, wobei die Erfassungseinheit einen in einem Sichtfeld der Erfassungseinheit befindlichen Erfassungsbereich aufweist und die Erfassungseinheit ausgestaltet ist, den Erfassungsbereich auf das Stückgut samt Markierung oder zumindest auf die die Markierung zu richten.
b) Die Kontrolleinheit ist ausgestaltet zum Auslesen der Markierung anhand des erstellten Abbilds und somit zum Identifizieren des Stückguts.

Gemäß einer Ausführungsform kann die Erfassungseinheit statisch ausgestaltet sein und/oder am Körper eines Bedieners tragbar sein, insbesondere im Brust- und/oder Kopfbereich. Eine tragbare Erfassungseinheit ist besonders flexibel einsetzbar, ein Tragen im Brust- und/oder Kopfbereich führt dazu, dass das Blickfeld des Bedieners im Wesentlichen im Sichtfeld der Erfassungseinheit liegt und so stets die Markierung des ausgewählten Stückguts im Sichtfeld der Erfassungseinheit liegt.

Gemäß einer Ausführungsform kann die Vorrichtung auch mehrere gleich und/oder unterschiedlich ausgestaltete Erfassungseinheiten umfassen.

Damit das ausgewählte Stückgut nicht nur identifiziert wird, sondern seine Abwicklung auch dokumentiert wird, können die Erfassungseinheit und die Kontrolleinheit ausgestaltet sein zum Erfassen eines Behandelns des Stückguts nach einer Vorschrift der Abwicklung. Das Durchführen eines Prozessschrittes kann anhand einer von den Abbildern erfassten Aktivität (deuten auf Gepäckanhänger, bewegen des Gepäckstücks) oder mit einem von einem Bediener aktivierbaren Eingabe erfasst werden.

Gemäß einer Ausführungsform kann die Vorrichtung zudem ein Erkennungsmittel umfassen, welches zum Richten hin zum und/oder in den Erfassungsbereich ausgestaltet ist.

Gemäß einer weiteren Ausführungsform kann das Erkennungsmittel mindestens eine von der Kontroll- und Erfassungseinheit identifizierbare und auslesbare Eigenschaft aufweisen, insbesondere ein auffälliges Muster und/oder eine auffällige Farbe und/oder eine Beleuchtung, insbesondere einen Lichtpunkt eines Laserpointers oder einer Leuchtdiode (LED), und/oder zumindest einen Teil mindestens einer Hand eines Bedieners umfassen und/oder markieren.

Um Zweideutigkeiten beim Identifizieren des ausgewählten Stückguts und Verwechslungen zu vermeiden, wenn sich mehr als eine Markierung im Sichtfeld der Erfassungseinheit befindet, können die Erfassungseinheit und die Kontrolleinheit ausgestaltet sein zum Erkennen eines verbalen und/oder nonverbalen Befehls, um den Erfassungsbereich zu identifizieren.

Gemäß einer weiteren Ausführungsform kann die Erfassungseinheit eine mobile Kamera, insbesondere ein Bodycamera, oder eine statische Kamera oder eine Datenbrille sein. Bereits existierende und ursprünglich zu einem anderen Zweck installierte statische Kameras können zu diesem Zweck herangezogen werden.

Ausführungsformen der Erfindung werden nachfolgend anhand der Figuren beispielsweise näher erläutert. Dabei zeigen:
- Figur 1: ein Verladen zwischen einem Transportwagen und einer Laderampe eines Flugzeugs; und
- Figur 2: eine erfindungsgemäße Vorrichtung mit unterschiedlich ausgestalteten Erfassungseinheiten und ihren zugehörigen Sichtfeldern sowie dem Erfassungsbereich.

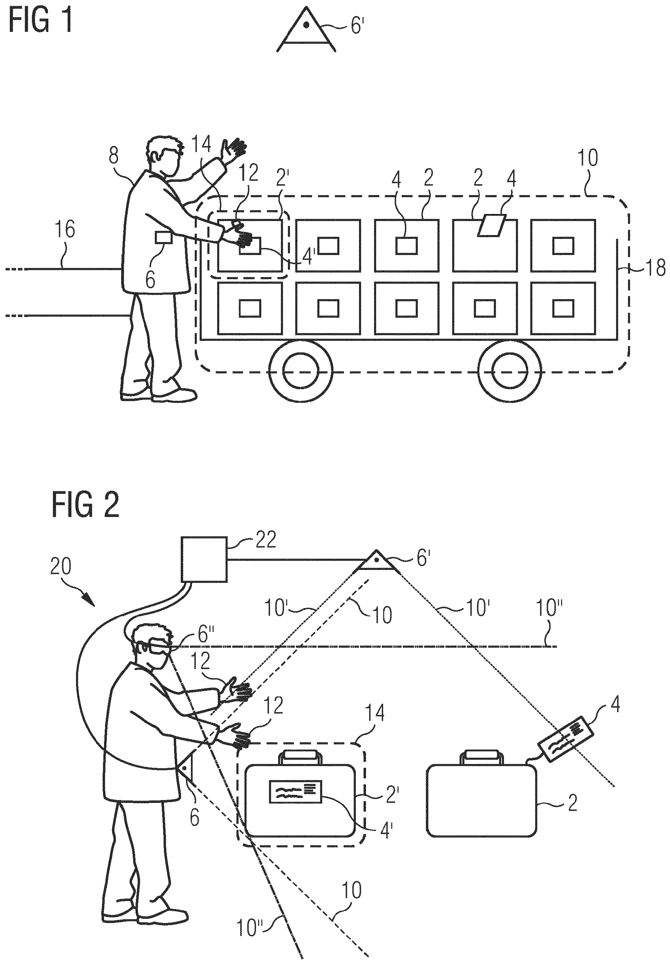

Figur 1 zeigt ein Verladen von Gepäckstücken 2 von einem Transportwagen 18 auf eine Laderampe 16 eines Flugzeugs durch einen Bediener 8 gemäß einer Ausführungsform der Erfindung unter Verwendung einer erfindungsgemäßen Vorrichtung 20. Das generelle Vorgehen des Verfahrens sowie die Ausgestaltung der Vorrichtung verändert sich aber auch bei einer Anwendung im Postbereich nicht wesentlich, wenn die Stückgüter Postsendungen wie beispielsweise Pakete oder Päckchen sind. Die Vorrichtung 20 umfasst eine Erfassungseinheit 6 und eine Kontrolleinheit 22. Jedes Gepäckstück 2 ist mit einem Gepäckanhänger 4 als Markierung 4 versehen. Der Bediener 8 ist mit einer Bodycamera 6 als Erfassungseinheit 6 im Brustbereich ausgestattet, wobei das Sichtfeld 10 der Erfassungseinheit 6 auch in etwa dem Sichtfeld des Bedieners 8 entspricht, wenn er sich den Gepäckstücken 2 zuwendet. Dies ist auch bei einem Tragen der Bodycamera 6 im Kopfbereich gewährleistet, allerdings wird das Tragen im Brustbereich allgemein als weniger störend empfunden.

Die Erfassungseinheit 6 nimmt mindestens ein Abbild, typischerweise aber mehrere Abbilder ihres Sichtfeldes 10 auf, entweder in der Form von Fotos, Scanbildern und/oder Videos. Die Abbilder zeigen das gesamte ausgewählte Stückgut 2', zumindest aber einen Teil von diesem und dessen gesamte, zumindest aber einen für das Auslesen relevanten Teil der Markierung 4'. Anhand des Abbilds wird die Markierung 4' des Stückgut 2' ausgelesen. Das ausgewählte Gepäckstück 2', also dasjenige, das nun auf die Laderampe 16 hin zum Flugzeug verladen werden soll, wird nun mit den Händen ergriffen, wobei der Daumen der einen Hand mit einem Erkennungsmittel 12 markiert ist. Das Erkennungsmittel 12 agiert als Marker des Erfassungsbereichs 14, der Region of Interest, in welcher sich die Markierung 4' des ausgewählten Stückguts 2' befindet und ist typischerweise durch ein auffälliges Muster durch die Erfassungseinheit 6 gut von der übrigen Umgebung unterscheidbar und zeigt der Kontrolleinheit 22 an, welche der im Sichtfeld 10 der Erfassungseinheit 6 liegenden Markierungen 4, 4' die zu dem ausgewählten Stückgut 2' gehörige und zu identifizierende Markierung 4' ist. Durch die Positionierung des Erkennungsmittel 12 wird der Erfassungsbereich 14 auf die Lage der Markierung 4' des ausgewählten Stückguts 2' in Übereinstimmung gebracht.

Hier markiert das Erkennungsmittel 12 nur den Daumen, dessen Nagel in aller Regel bei einer manuellen Verladung eines Stückguts 4 immer in Richtung der Erfassungseinheit 6 schaut. Daher kann als reduzierteste Form eines Erkennungsmittels 12 bereits ein markierter oder nichtmarkierter Daumennagel agieren. Das Erkennungsmittel 12 umfasst in einer anderen Ausführungsform auch weitere Bereiche der Hand, beispielsweise zusätzlich den Zeigefinger, oder ist als eigenständige, greifbare zusätzliche Vorrichtung ausgestaltet, die als Pointer agiert. Unabhängig von seiner genauen Ausführung wird das Erkennungsmittel 12 hin zu der Markierung 4' bewegt, bei zu nahe aneinander liegenden Markierungen 4 kann es erforderlich sein, die Markierung 4' des ausgewählten Stückguts 2' physisch zu berühren bzw. in die Hand zu nehmen. Die Positionierung des Erkennungsmittels 12 hin zu der Markierung 4', unabhängig davon, ob diese in die Hand genommen wird oder nicht, bestimmt den Erfassungsbereich 14 der Erfassungseinheit 6.

In einer Ausführungsform agiert als Erkennungsmittel 12 ein Lichtpunkt eines Laserpointers. Es wird also diejenige Markierung 4' von der Kontrolleinheit 22 ausgelesen, in dessen Nähe oder auf der sich der Lichtpunkt befindet. Der Laserpointer kann von der Erfassungseinheit 6 umfasst werden, aber auch getrennt von der Erfassungseinheit 6 an anderer Position angebracht und positioniert sein. So ist es möglich, die Erfassungseinheit 6 im Brustbereich des Bedieners zu positionieren und den Laserpointer am Kopf des Bedieners anzubringen. Ähnlich wie der Laserpointer kann als Erkennungsmittel 12 auch eine anders ausgestaltete Beleuchtung verwendet werden, beispielsweise eine Leuchtdiode (LED). Die Leuchtdiode kann an unterschiedlicher Position angebracht werden, beispielsweise an der Hand des Bedieners als Teil eines, evtl. in reduzierter Ausgestaltung realisierten, Handschuhs.

In einer reduzierten Ausführungsform agiert auch allein die Hand selber als Erkennungsmittel 12. Es muss dazu ein weiterer Prozessschritt eingeführt werde, bei dem der Bediener in jedem Fall die Markierung 4' in die Hand nehmen muss. In aller Regel schaut dann der Fingernagel des Daumens immer in die Richtung Kamera. Die Hand als Erkennungsmittel 12 kann auf verschiede Arten erkennt werden. Zunächst über die Farbe der Haut. Zumindest in diesem Fall ist eine Kalibrierung notwendig, weil unterschiedliche Personen unterschiedliche Hautfarben bzw. Hauttöne haben. Auch spezielle Lichtverhältnisse am Arbeitsplatz könnten eine Kalibrierung notwendig machen. Wenn die Hautfarbe nicht ausreichend gut von der Umgebung unterscheidbar ist, kann die Hand deutlicher gemacht werden. Dies könnte über einen Handschuh in einer leicht erkennbaren bzw. unterscheidbaren Farbe gemacht werden, der dann als zusätzliches Erkennungsmittel 12' agiert. Statt einer einheitlichen Farbe kann auch ein Muster verwendet werden. Der Handschuh kann auch sehr minimalistisch gehalten werden und Finger oder gar mehr frei lassen. Letztlich muss nur eine leicht von der Bildverarbeitungssoftware der Kontrolleinheit 22 erkennbare Markierung an der Hand getragen werden. Prinzipiell könnte auch die Form der Hand erkannt werden, allerdings ist dies schwerer und mit mehr Rechenaufwand zu implementieren. Auch eine 3D-Erkennung ist möglich, bei der die Form der Hand erkannt wird. In schwierigen Fällen kann aus dem zeitlichen Verlauf der von der Erfassungseinheit 6 aufgenommenen Abbilder (oder 3D-Formen) die Hand erkannt werden. Wenn zuerst nach dem Vorkommen und ggf. der Position einer Hand im Bild gesucht wird, kann optional die Suche nach Markierungen 4 auf den Umkreis dieser Fundstelle eingeschränkt werden, was Rechenzeit spart.

Auch bei Verwendung der Hand als Erkennungsmittel 12 zur Einschränkung des Erfassungsbereichs 14 kann es schwierig sein, den richtigen bzw. relevanten Erfassungsbereich 14 aus dem Sichtfeld 10 auszuwählen. Unterstützend können zum "Auslösen" folgende "Schalter" verwendet werden:
Gemäß einer weiteren Ausführungsform ist das Erkennungsmittel 12 eine unabhängig und variabel positionierbare Vorrichtung, die unabhängig von der Hand des Bedieners 8 ist. Die Anbringung an bzw. Verbindung mit der Hand hat jedoch den Vorteil, dass das Erkennungsmittel 12 nicht jedes Mal separat in die Hand genommen werden muss und somit der Arbeitsfluss nicht unterbrochen wird.

Gemäß einer weiteren Ausführungsform können mehrere der oben ausgeführten Ausführungsformen des Erkennungsmittels 12 als gemeinsames, besonders gut auslesbares Erkennungsmittel herangezogen werden. Die Kombination von auffälliger Farbe und/oder Markierung mit einer Beleuchtung sollte die Erkennbarkeit durch die Erfassungseinheit 6 und die Kontrolleinheit 22 zusätzlich erhöhen

Durch die Eingrenzung des von der Kontrolleinheit 22 auszulesenden Erfassungsbereichs 14, wenn also zunächst nach dem Vorkommen des Erkennungsmittels 12 und erst danach nach der Markierung 4' des ausgewählten Stückguts 2' gesucht wird, wird sowohl die Fehlerquote durch fälschliches Identifizieren verringert, als auch der von der Kontrolleinheit 22 benötigte Rechenaufwand zum Einlesen der Markierung 4' verringert, da nur die Markierung 4' des ausgewählten Stückguts 2' erkannt, eingelesen und identifiziert werden muss. Das Verfahren und die Vorrichtung 20 ermöglichen eine eindeutige Zuordnung einer eingelesenen Markierung 4 zum tatsächlich abgewickelten Stückgut 2.

Zusätzlich kann das Erkennen und die Auswahl des Erfassungsbereichs 14 noch unterstützt werden durch weitere Hilfsmittel oder Befehle verbaler und/oder nonverbaler Art. Die Kontrolleinheit 22 kann ausgestaltet sein zum Erkennen einer Handgeste. Die Software könnte z.B. so implementiert werden, dass sie dann ein Bild nach Barcodes und/oder Klartext als Markierung 4 auswertet, wenn eine Hand als Erkennungsmittel 12 im Sichtfeld 10 erkannt wird, deren Finger zu einem Kreis geformt werden. Dann wird im Umkreis oder in Verlängerung dieser Hand nach einem passenden Barcode gesucht. Eine breite Palette alternativer Gesten ist möglich, beispielsweise auch Daumen hoch oder Zeigen mit Zeigefinger auf Barcode.

Als auslösender Befehl wird gemäß einer Ausführungsform eine Sprachsteuerung verwendet. Wird das entsprechende Sprachkommando erkannt, wird im Umkreis des Erkennungsmittels 12 nach Markierungen 4, 4' gesucht.

Gemäß einer Ausführungsform kann die Vorrichtung 20 zudem einen physischen Schalter umfassen, als zusätzliche Einheit oder von dem Erkennungsmittel 12 umfasst, indem der Schalter beispielsweise an einem Handschuh angebracht wird. Wird der Schalter gedrückt, wird im Umkreis des Erkennungsmittels 12 nach Markierungen 4, 4' gesucht. Auch weitere Vorrichtungen und Funktionalitäten können in einen derartigen Handschuh (zusätzlich zum Schalter oder unabhängig von diesem) integriert werden. Ein Beispiel hierfür ist die weiter oben aufgeführte, aktive, als Erkennungsmittel 12 agierende Beleuchtung.

Um dem Bediener eine Rückmeldung darüber zu geben, ob das Einlesen der ausgewählten Markierung 4' und somit das Identifizieren des ausgewählten Stückguts 2' tatsächlich erfolgreich war bzw. allenfalls auch, ob tatsächlich die ausgewählte Markierung 4' und eben keine weitere, im Sichtfeld befindliche Markierung 4 erfasst worden ist, ist die Vorrichtung 20 gemäß einer weiteren Ausführungsform ausgestaltet, dem Bediener 8 eine von der Erfassungseinheit 6 und/oder der Kontrolleinheit 22 erzeugte akustische und/oder optische und/oder anderweitig ausgestaltete Rückmeldung zu geben. Die Rückmeldung kann von der Kontrolleinheit und/oder der Erfassungseinheit und/oder einer weiteren Vorrichtung erzeugt werden. Optische Rückmeldungen können beispielsweise ein Blinken einer Szenenbeleuchtung oder ein Blinksignal der Beleuchtung des Erkennungsmittels 12, beispielsweise des Laserpointers, sein. Möglich wäre auch eine haptische Rückmeldung, beispielsweise ein Vibrieren bei einem erfolgreichen Auslesen und Identifizieren.

Figur 2 zeigt eine erfindungsgemäße Vorrichtung 20 mit unterschiedlich ausgestalteten Erfassungseinheiten 6, 6', 6" und ihren zugehörigen Sichtfeldern 10, 10', 10" sowie dem stets im Wesentlichen übereinstimmenden Erfassungsbereich 14. Der genaue Blickwinkel des Erfassungsbereichs 14 unterscheidet sich natürlich, jedoch umfasst der Erfassungsbereich 14 stets das ausgewählte Stückgut 2' und dessen Markierung 4'. Als Erfassungseinheit 6 können eine im Bereich des Oberkörpers des Bedieners 8 tragbare Bodycamera 6, eine statische Kamera 6', beispielsweise eine bereits installierte Überwachungskamera, und/oder eine Datenbrille 6" agieren. Die Erfassungseinheiten 6, 6', 6" sind jeweils mit der Kontrolleinheit 22 verbindbar ausgestaltet. Als Erkennungsmittel 12 dienen die Hände des Bedieners 8 - je nach Ausgestaltung mit oder ohne eine handschuhartige Vorrichtung versehen.

Die Anforderungen an die Erfassungseinheit 6 sind dass sie ein Abbild mit hoher visueller Auflösung und guter Bildqualität aufnehmen können, damit die Markierung 4' basierend auf dem Abbild fehlerfrei auslesbar ist. Die Kontrolleinheit 22 ist ausgestaltet zum Auslesen des Abbilds. Die Verwendung von Bodycameras 6 als Erfassungseinheit 6 hat den Vorteil, dass weder das Sichtfeld des Bedieners, noch seine Bewegungsfreiheit eingeschränkt ist. Zudem stimmt das Sichtfeld des Bedieners 8 im Wesentlichen mit dem Sichtfeld 10 der Erfassungseinheit 6 überein, was ein Erfassen einer vom Bediener 8 gesehenen Markierung 4 durch die Erfassungseinheit 6 zuverlässig gewährleistet. Im Gegensatz zu statischen Kameras 6' sind am Körper tragbare Kameras (Bodycameras) günstig und vor allem flexibel positionierbar ohne großen Installationsaufwand.

Die am Körper befestigte Kamera kann Markierungen 4 beim Be-, Ent- und Verladen von Gepäckstücken an Flughäfen registrieren und so die Gepäckstücke 2 identifizieren. Dies hat den Vorteil, dass ein Bediener nicht durch einen Handscanner behindert wird und beide Hände frei hat. Die Markierungen 4 von Gepäckstücken 2 sind in der Regel als Gepäckanhänger auf Etiketten / Labels aufgebracht, die z.B. am Koffergriff befestigt werden und umfassen typischerweise Barcodes und Klartext. Die Gepäckanhänger sind häufig zerknittert und müssen, damit sie lesbar sind, gerade gezogen werden. Bei dieser Arbeit kann es vorkommen, dass die Gepäckanhänger 4 von mehr als einem Gepäckstück 2 im Blickfeld der Kamera sind. Der Bediener wird von einer Bodycamera kaum behindert und das Verfahren zum Identifizieren von Gepäckstücken 2 im Rahmen ihrer Abfertigung integriert sich natürlich in den Arbeitsablauf der Abfertigung.

Mit Hilfe der Erfindung kann auf einfach Weise identifiziert werden, welches davon das ausgewählte Gepäckstück 2' ist, das verladen wird. Auch ist es möglich, dass zwar nur ein Gepäckanhänger 4 eines Gepäckstücks 2 im Bild ist, dieser Gepäckanhänger jedoch zum falschen Gepäckstück gehört. Es wird eine Methode bereitgestellt, richtige Gepäckanhänger zu erfassen und falsche auszuschließen.

Gemäß einer Ausführungsform ist die Kontrolleinheit 22 zudem ausgestaltet zum Erfassen der Abfertigung des Gepäckstücks 2. Nach dem Identifizieren wird die Behandlung nach der Vorschrift des Abwicklungsprozesses von der Kontrolleinheit 22 erfasst. Eine Möglichkeit ist das Feststellen einer Lageveränderung des Gepäckstücks 2' anhand der Abbilder, eine andere Möglichkeit das Erfassen eines zusätzlichen Befehls durch die Erfassungseinheit 6 und/oder Kontrolleinheit 22, welcher als Nachweis für die erfolgte Behandlung nach der Vorschrift des Abwicklungsprozesses agiert.

Gemäß einer Ausführungsform besteht ein großer technologischer Vorteil darin, dass die Stückgüter 4 selber oder zumindest große Teile von ihnen auf den aufgenommen Abbildern gut sichtbar sind. Dadurch ist es möglich, die Abbilder als Beweisfotos zu nutzen um beispielsweise den Zustand der Stückgüter zum Zeitpunkt der Erfassung nachzuweisen. Diese Eigenschaft ist im Flughafenbereich von großem Vorteil, wenn Gepäckstücke beschädigt werden und eventuelle Haftungsanspruche ermittelt werden müssen. Die Abbilder können auch bei einer Suche von Gepäckstücken verwendet werden, um beispielsweise Koffer von eingecheckten, aber nicht geboardeten Passagieren schneller zu finden oder um beim Lost&Found schneller einen Koffer am Flughafen zu identifizieren.

### Bezugszeichenliste

- 2: Stückgut
- 4: Markierung
- 6: Erfassungseinheit
- 8: Bediener
- 10: Sichtfeld der Erfassungseinheit
- 12: Erkennungsmittel
- 14: Erfassungsbereich
- 16: Förderstrecke (z.B. Laderampe eines Flugzeugs)
- 18: Transportbehälter
- 20: Vorrichtung
- 22: Kontrolleinheit

## Patentansprüche

1. Verfahren zum Identifizieren von einem ausgewählten Stückgut (2), das eine Markierung (4) mit einem das Stückgut (2) identifizierbaren Informationssatz aufweist, im Rahmen einer Abwicklung dieses Stückguts (2), insbesondere einer Abfertigung eines Gepäckstücks im Rahmen einer Flughafen-Gepäckabfertigung, umfassend die Verfahrensschritte:
a) Erstellen eines Abbilds des Stückguts (2) oder Teilen des Stückguts (2) samt Markierung (4) oder zumindest Teilen der Markierung (4) durch eine Erfassungseinheit (6), beispielsweise eine Kamera, wobei sich das Stückgut (2) samt Markierung (4) oder zumindest die Markierung (4) in einem Sichtfeld eines Bedieners (8) und in einem von einem Sichtfeld (10) der Erfassungseinheit (6) umfassten Erfassungsbereich (14) befindet, wobei die Erfassungseinheit (6) derart positionierbar ist, dass sich die Markierung (4) in dem Sichtfeld (10) der Erfassungseinheit (6) befindet;
b) Identifizieren des Stückguts (2) durch Auslesen der Markierung (4) anhand des erstellten Abbilds durch eine Kontrolleinheit (22); und
c) Behandeln des Stückguts (2) nach einer Vorschrift der Abwicklung.

2. Verfahren nach Anspruch 1, zudem umfassend den Verfahrensschritt
Abspeichern des erstellten Abbilds über das Behandeln des Stückguts (2) nach der Vorschrift der Abwicklung hinaus und Heranziehen des Abbilds zur späteren Verwendung, insbesondere zum Beweisen eines Zustands des Stückguts (2) zum Zeitpunkt der Erstellung des Abbilds und/oder zum Erkennen des Stückguts (2) .

3. Verfahren nach einem der Ansprüche 1 bis 2, **dadurch gekennzeichnet, dass**
die Erfassungseinheit (6) zum Anbringen am Körper eines Bedieners (8), insbesondere im Brust- und/oder Kopfbereich, ausgestaltet ist.

4. Verfahren nach einem der Ansprüche 1 bis 3, zudem umfassend den Verfahrensschritt
Richten eines Erkennungsmittels (12) hin zum und/oder in den Erfassungsbereich (14), wobei
das Erkennungsmittel (12) mindestens eine von der Kontroll-und Erfassungseinheit (6) identifizierbare und auslesbare Eigenschaft aufweist, insbesondere ein auffälliges Muster und/oder eine auffällige Farbe und/oder eine Beleuchtung, insbesondere einen Lichtpunkt eines Laserpointers oder einer Leuchtdiode (LED).

5. Verfahren nach Anspruch 4, **dadurch gekennzeichnet, dass** die Erkennungsmittel (12) zumindest einen Teil mindestens einer Hand eines Bedieners (8) umfasst und/oder markiert.

6. Verfahren nach einem der Ansprüche 1 bis 5, zudem umfassend den Verfahrensschritt
Rückmelden eines erfolgreichen Identifizierens des Stückguts (2) durch Auslesen der Markierung (4) an den Bediener (8) durch eine von der Erfassungseinheit (6) und/oder der Kontrolleinheit (22) erzeugte akustische und/oder optische Rückmeldung an den Bediener (8).

7. Verfahren nach einem der Ansprüche 1 bis 6, zudem umfassend den Verfahrensschritt
Erfassen des Behandelns des Stückguts (2) nach der Vorschrift der Abwicklung durch die Erfassungs- und/oder Kontrolleinheit (22) .

8. Verfahren nach einem der Ansprüche 1 bis 7, zudem umfassend den Verfahrensschritt
Erkennen des Erfassungsbereichs (14) und/oder des Behandelns des ausgewählten Stückguts (2) anhand eines verbalen und/oder nonverbalen Befehls.

9. Vorrichtung (20) zum Identifizieren von einem ausgewählten Stückgut (2), das eine Markierung (4) mit einem das Stückgut (2) identifizierbaren Informationssatz aufweist, im Rahmen einer Abwicklung dieses Stückguts (2), insbesondere einer Abfertigung eines Gepäckstücks im Rahmen einer Flughafen-Gepäckabfertigung eines, umfassend eine Erfassungseinheit (6), beispielsweise eine Kamera, und eine Kontrolleinheit (22), wobei
a) die Erfassungseinheit (6) ausgestaltet ist zum Erstellen eines Abbilds des Stückguts (2) oder Teilen des Stückguts (2) samt Markierung (4) oder zumindest Teilen der Markierung (4), wobei die Erfassungseinheit (6) einen in einem Sichtfeld (10) der Erfassungseinheit (6) befindlichen Erfassungsbereich (14) aufweist und die Erfassungseinheit (6) ausgestaltet ist, den Erfassungsbereich (14) auf das Stückgut (2) samt Markierung (4) oder zumindest auf die die Markierung (4) zu richten; und
b) die Kontrolleinheit (22) ausgestaltet ist zum Auslesen der Markierung (4) anhand des erstellten Abbilds und somit zum Identifizieren des Stückguts (2).

10. Vorrichtung (20) nach Anspruch 9, **dadurch gekennzeichnet, dass**
Erfassungseinheit (6) statisch ausgestaltet ist und/oder am Körper eines Bedieners (8) tragbar ist, insbesondere im Brust- und/oder Kopfbereich.

11. Vorrichtung (20) nach einem der Ansprüche 9 bis 10, **dadurch gekennzeichnet, dass**
die Erfassungseinheit (6) und die Kontrolleinheit (22) ausgestaltet sind zum Erfassen eines Behandelns des Stückguts (2) nach einer Vorschrift der Abwicklung.

12. Vorrichtung (20) nach einem der Ansprüche 9 bis 11, zudem umfassend
ein Erkennungsmittel (12), welches zum Richten hin zum und/oder in den Erfassungsbereich (14) ausgestaltet ist.

13. Vorrichtung (20) nach Anspruch 12, **dadurch gekennzeichnet, dass**
das Erkennungsmittel (12) mindestens eine von der Kontroll-und Erfassungseinheit (6) identifizierbare und auslesbare Eigenschaft aufweist, insbesondere ein auffälliges Muster und/oder eine auffällige Farbe und/oder eine Beleuchtung, insbesondere einen Lichtpunkt eines Laserpointers oder einer Leuchtdiode (LED), und/oder zumindest einen Teil mindestens einer Hand eines Bedieners (8) umfasst und/oder markiert.

14. Vorrichtung (20) nach einem der Ansprüche 9 bis 12, **dadurch gekennzeichnet, dass**
die Erfassungseinheit (6) und die Kontrolleinheit (22) ausgestaltet sind zum Erkennen eines verbalen und/oder nonverbalen Befehls, um den Erfassungsbereich (14) zu identifizieren.

15. Vorrichtung (20) nach einem der Ansprüche 9 bis 14, **dadurch gekennzeichnet, dass**
die Erfassungseinheit (6) eine mobile Kamera, insbesondere ein Bodycamera, oder eine statische Kamera oder eine Datenbrille ist.
